# EUROPÄISCHE PATENTSCHRIFT

(11) **EP 2 112 210 B1**
(45) Veröffentlichungstag und Bekanntmachung des Hinweises auf die Patenterteilung: **01.09.2010**
(21) Anmeldenummer: 09157121.6
(22) Anmeldetag: 01.04.2009
(51) Int. Cl.: C09J 7/04

(54) **Mit thermoplastischem Klebemittel beschichtetes, Silikonöl-abweisendes Papiererzeugnis**
Silicone oil-repelling paper product coated with thermoplastic adhesive
Produit en papier revêtu de colle thermoplastique et repoussant l'huile de silicone

(30) Priorität: 11.04.2008 DE 102008019211
(43) Veröffentlichungstag der Anmeldung: 28.10.2009
(73) Patentinhaber: Bayropa Jung GmbH, 86637 Wertingen (DE)
(72) Erfinder: Uhlemayr, Reinhold, 71277, Rutesheim (DE)
(74) Vertreter: Charrier, Rapp & Liebau

(56) Entgegenhaltungen:
- DE-A1- 19 510 974
- DE-C1- 4 432 903
- US-A- 5 736 230

## Beschreibung

Die Erfindung betrifft ein Papiererzeugnis mit einer Silikonöl-abweisenden, aktivierbaren Klebemittelbeschichtung, die mit einem Laserdrucker bedruckbar ist, wobei die Klebemittelbeschichtung zum Verkleben einer Einzellage mit sich selbst oder von benachbarten Lagen von Papiererzeugnissen miteinander vorgesehen ist, und die Silikonölabweisung mit einem Silikonöl-abweisenden Stoff eingestellt wird. Das Klebemittel weist einen Silikonöl-abweisenden Stoff, vorzugsweise ein Silikonöl-abweisendes Tensid, auf. Als Silikonöl-abweisende Tenside kommen beispielsweise fluorchemische Tenside in Frage.

Die Erfindung betrifft insbesondere einlagige Papiererzeugnisse mit einer Silikonöl-abweisenden, aktivierbaren Klebemittelbeschichtung, welche mit Hochleistungs-Laserprintern bedruckbar und nachfolgend ohne Zwischenlagerung nach der Bedruckung zum fertigen Einblattmailer gefaltet und verklebt werden können oder zu einem mehrlagigen Papiererzeugnis, wie zum Beispiel einem Formularsatz oder dergleichen, konfektioniert werden können.

Die Erfindung betrifft ferner die Verwendung dieser Papiererzeugnisse als Einblattmailer sowie deren Verwendung bei der Herstellung von Formularsätzen sowie die Verwendung des Papiererzeugnisses zur Herstellung laserbedruckter Papiererzeugnisse mit erhöhter Fälschungssicherheit.

Die bisher bekannten laserbedruckbaren Papiererzeugnisse, die nach der Bedruckung zu so genannten Einblattmailern verklebt werden können und die z. B. aus der DE 36 28 471 A1 bekannt sind, zeigen bei einer Bedruckung mittels Laserdrucker vermehrt Probleme, wenn Hochleistungs-Laserdrucker zum Einsatz kommen, bei denen eine sehr hohe Druckgeschwindigkeit erzielbar ist. Bei solchen Laserdruckern ist es notwendig, entsprechend dem erhöhten Papierdurchsatz bzw. der erhöhten Papierdurchlaufgeschwindigkeit die Temperatur bei der Fixierstation, bei der das zunächst nur lose am Papier haftende Tonermaterial auf der Papieroberfläche fixiert wird, zu erhöhen, um eine ausreichende Fixierung des Tonermaterials auf der Papieroberfläche in der jetzt kürzeren zur Verfügung stehenden Zeit zu erzielen.

Um zu verhindern, dass Tonermaterial an der Fixierstation, insbesondere der Heizwalze der Fixierstation, zu Verklebungen an Geräteteilen oder Papierlagen unter einander führt, ist es notwendig, die Fixierwalze mit einem Trennmittel zu beaufschlagen, das in einer Vielzahl der Fälle als Hauptkomponente Silikonöl enthält. Bei steigenden Fixiertemperaturen ist ein höherer Trennmitteleinsatz notwendig.

Trennmittel, insbesondere Silikonöle, weisen jedoch besonders starke Anti-Adhäsivwirkungen auf, das heißt die Klebeeigenschaften der Klebebeschichtung der in den Laserdruckern bedruckten Papiererzeugnisse werden stark reduziert bzw. gänzlich zerstört oder unterdrückt.

In einem solchen Zusammenhang beschreibt die Patentschrift EP-B1-0257545 z. B. ein Klebemittel, das vollflächig auf ein Papiersubstrat aufgebracht wurde, danach mit einem Laserdrucker bedruckt wird und sodann durch Hitze und Druck definierte Klebestellen erzeugt werden. Die Patentschrift beschreibt zudem, dass durch Zugabe von Pigmenten oder Wachsen usw. die Versiegelungstemperatur der Beschichtung an den Laserprinter angepasst werden kann. Ein Verkleben der Beschichtung in der Fixierstation wird dadurch verhindert. Die Verschlusstechnik erfolgt mit Druck- und Temperaturanwendung. Es zeigte sich bei der Ausführung der Verfahrensweise nach EP-B1-0257545 allerdings, dass ein Einsatz von Silikonöl in der Fixierstation die Verschlusstechnik entweder erschwert oder ganz verhindern kann.

Dieser Effekt wird leider in unterschiedlichem Umfang bei den meisten Klebemittelsystemen der derzeit gängigen Einblattmailersysteme beobachtet:
a) Klebemittelsysteme unter Verwendung von Wiederanfeuchtleimen;
b) Klebemittelsysteme unter Verwendung von druckaktivierbaren Selbstklebemitteln;
c) Klebemittelbeschichtung unter Verwendung von thermoplastischen Klebstoffen.

Insbesondere störempfindlich gegenüber Silikonölen sind die Systeme a und b, mit denen bereits bei geringeren Silikonanteilen an der Oberfläche ein sicheres Verschließen der Einblattmaile nicht mehr gewährleistet werden kann.

Um diese negativen Einflüsse besser zu beherrschen wurde gemäß den Patentschriften DE 4432903 C1, DE 4432902 C1 und DE 4432876 versucht, durch eine schnellere Silikonaufnahme in das Papier die Problematik zu lösen. Durch Zusatz von Silikonöl bindenden Mitteln konnte diesem Umstand größtenteils entgegengewirkt werden.

Durch die ständig zunehmenden Beschriftungsgeschwindigkeiten steigen aber auch die Silikonöldosierungen, sodass auch hier die Speicherkapazität des Papiers sehr schnell erschöpft ist und wiederum Verklebungsprobleme bei der nachfolgenden Verschlusstechnik auftreten.

Die hohen Temperaturen bei der Tonerfixierung treiben das Silikonöl in das Papier und z. B. in den thermoplastischen Kunststoff; dies führt wiederum zu Verklebungsproblemen, die bei der Verschlusstechnik durch sehr hohe Temperaturen und Druck ausgeglichen werden müssen. Ein starker Verschleiß und Lärmentwicklung in der Verschlussmaschine sind die Folge.

Einblattmailer werden in immer stärkerem Umfang zur rationellen Versendung von Informationen verwendet, die lediglich dem Empfänger zugänglich gemacht werden sollen, so dass eine sichere Verklebung, das heißt ein sicheres Verschließen der Einblattmailer von essentieller Bedeutung ist. Erwähnt seien hier nur Benachrichtigungen von Versicherungsnehmern durch Versicherungen bei Änderungen von Versicherungsbedingungen, Anpassungen von Versicherungsbeiträgen; Versendung von Lohnabrechnungen; Versendung von Kontoauszügen der Banken etc.

Mildern lässt sich das Problem der Desaktivierung der Klebemittelbeschichtungen durch eine Zwischenlagerung der bedruckten Papiere für eine gewisse Zeit. Dies stört jedoch den Arbeitsablauf erheblich und birgt zudem die Gefahr, dass unberechtigte Dritte Zugang zu vertraulichen Informationen erlangen.

Es ergibt sich somit die Aufgabe, den erhöhten Anforderungen beim Bedrucken von mit Klebemitteln beschichteten Papiererzeugnissen mit Laserdruckern, bei denen Silikonöle als Trennmittel zum Einsatz kommen, gerecht zu werden, sodass eine ausgezeichnete Druckqualität beibehalten werden kann.

Eine weitere Aufgabe der Erfindung ist es, ein Papiererzeugnis, insbesondere zur Verwendung als Einblattmailer, zu schaffen, bei dem nach der Laserbedruckung des Papiererzeugnisses eine Weiterverarbeitung zum Einblattmailer, das heißt insbesondere der Verklebung des Einblattmailers, online, das heißt ohne Zwischenlagerung der Papiere, erfolgen kann.

Außerdem ist es eine Aufgabe laserbedruckbare Papiererzeugnisse bereitzustellen, wobei deren Laserdruck eine erhöhte Fälschungssicherheit gewährleistet.

Die vorstehend angeführten Aufgaben wurden überraschenderweise dadurch gelöst, dass durch eine hydrophile Beschichtung eine Silikonölabweisung erfolgt. Insbesondere betrifft die Erfindung ein Papiererzeugnis nach Anspruch 1 mit einer Silikonöl-abweisenden, aktivierbaren Klebemittelbeschichtung, die mit einem Laserdrucker bedruckbar ist, wobei die Klebemittelbeschichtung zum Verkleben der Einzellage mit sich selbst oder von benachbarten Lagen von Papiererzeugnissen miteinander vorgesehen und die Silikonölabweisung mit einem Stoff eingestellt wird, der aus Fluoralkylnatriumsulfat(en), Fluoralkylpolyoxyethylen-Polymer(en), und Gemischen davon ausgewählt ist. Vorzugsweise beträgt die Einsatzmenge des die Silikonölabweisung hervorrufenden Stoffs im Falle von Fluoralkylnatriumsulfat(en) oder Fluoralkylpolyoxyethylen-Polymer(en) 0,001 - 3,0 %. Die Klebemittelbeschichtung enthält z.B. ein thermoplastisches Polymermaterial als Klebemittel.

Das thermoplastische Polymermaterial hat vorzugsweise folgende Eigenschaften:

| | | |
|---|---|---|
| a. | Mindestfilmtemperatur (MFT) | 10 - 25 °C, vorzugsweise 16 - 20 °C |
| b. | Filmbildungstemperatur (TG) | 20 - 45 °C, vorzugsweise 31 - 33 °C |

Vorzugsweise umfasst das thermoplastische Polymermaterial Polyvinylacetat, Copolymere von Vinylacetat und Ethylen, Polyvinylchlorid und/oder Polyacrylatdispersionen. Die Klebemittelbeschichtung kann auch einen mit Wasser aktivierbaren Anfeuchtleim und/oder einen druckaktivierbaren Selbstkleber umfassen. Die Klebemittelbeschichtung kann bereichsweise oder im Wesentlichen ganzflächig aufgetragen werden. Vorzugsweise werden die Bestandteile der Klebemittelbeschichtung so eingestellt werden, dass beim Beschichtevorgang eine schnelle Phasentrennung erfolgt, wobei die Silikonöl-abweisenden Stoffe an der Oberfläche eines Beschichtesubstrats bleiben bzw. sich überwiegend dort aufhalten. Das Klebemittel kann bevorzugt in einer Menge von 2-15 g/m² aufgetragen werden. Die erfindungsgemäßen Papiererzeugnisse können als Einblattmailer, bei der Herstellung von wie vorstehend beschriebenen Formularsätzen, oder zur Herstellung von Dokumenten, bei denen eine erhöhte Fälschungssicherheit gefordert wird, verwendet werden. Dokumente, bei denen eine erhöhte Fälschungssicherheit gefordert wird, sind z.B. ein Führerschein, eine Eintrittskarte, eine Identitätskarte, ein Teilnehmerausweis, ein vorläufiges Ausweisdokument, eine Benutzerkarte, ein Dokument für den Zahlungs- und Kreditverkehr, eine Police, ein Wertpapier, eine Urkunde oder ein Zahlungsmittel.

Weitere besondere Ausführungsformen und Vorteile werden aus den Unteransprüchen ersichtlich.

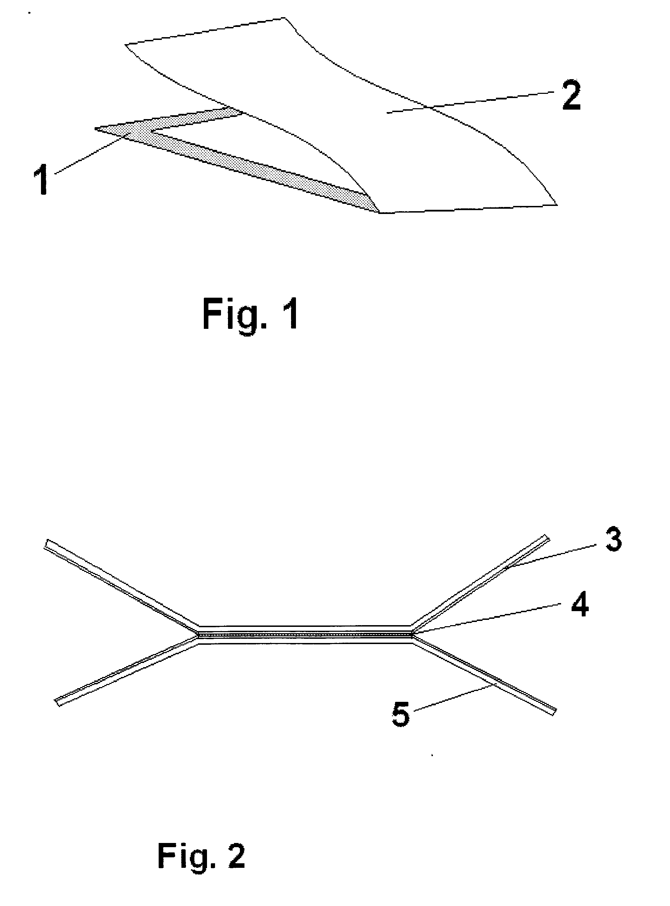

Figur 1 erläutert schematisch den Aufbau eines Einblattmailers. Bezugsziffer 1 bezeichnet das bereichsweise aufgetragene Klebemittel, auf das der obere Teil 2 des gefalteten Einblattmailers geklappt und danach durch Wärmeeinwirkung verschließend heiß gesiegelt wird.
Figur 2 zeigt den prinzipiellen Aufbau einer Klebestelle 4 zwischen zwei mit Klebemittel 3 versehenen Bereichen eines Einblattmailers oder zweier gesonderter Blätter, d.h. Papierlagen 5, wobei die Klebestelle einen integralen Bereich zwischen beiden Lagen ausbildet, der sich bis in das Innere der jeweiligen Lagen erstreckt. Die Dicke der Schicht 3 kann sich dabei vermindern oder fast ganz verschwinden. Die Schicht 3 kann auch auf die unbeschichtete Seite der Papierlage 5 heiß gesiegelt werden.

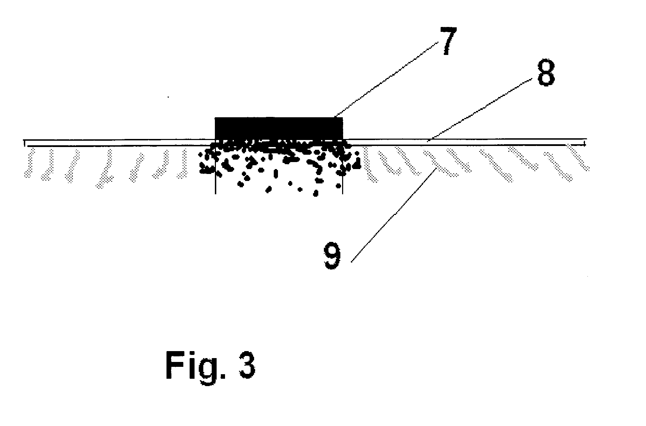

Figur 3 zeigt die Verankerung eines Tonerteilchens 7 in der Oberfläche des erfindungsgemäßen Papiererzeugnisses nach dem Fixierungsvorgang. Durch den Einsatz des Silikonöl-abweisenden Stoffes im Klebemittel 8 dringt der erweichte Toner sehr deutlich in das Kapillarnetzwerk des Papiers 9 ein. Beim Einsatz von Silikonöl lösenden Stoffen, wie im Stand der Technik vorgeschlagen, wird stattdessen Silikonöl in das Kapillarnetwerk hineingezogen und verhindert somit ein so tieferes Eindringen von Tonersubstanz in den Papierkörper, wie es bei dem erfindungsgemäßen Papiererzeugnis möglich ist. Der Grad der Anhaftung ist beim erfindungsgemäßen Papiererzeugnis gegenüber dem Stand der Technik erhöht.

Als Klebemittelsystem ist insbesondere das Klebemittelsystem mit einer thermoplastischen Polymermaterialbeschichtung als Klebemittel bevorzugt. Diese Klebemittelbeschichtung, versehen mit dem/n Silikonöl-abweisenden Stoff(en), lässt sich vollflächig als Strich auf das Laserdruckpapier auftragen und führt beim Bedrucken im Laserdrucker unerwarteterweise zu einem sehr starken Verankern des Tonermaterials in dem Papier, sodass das bedruckte Papiererzeugnis als dokumentenecht bezeichnet werden kann. Darüber hinaus lässt sich das erfindungsgemäße Papiererzeugnis problemlos in den Laserprintern, bei denen die Fixierung des Toners durch den Einsatz höherer Temperaturen erfolgt, verarbeiten, trotz der Verwendung des thermoplastischen Polymermaterials, und anschließend durch zweckbestimmte Anwendung von Druck und/oder Temperatur zu einem sicheren Klebeverbund von aufeinander liegenden Papierlagen verschließen.

Ein bevorzugtes thermoplastisches Polymermaterial für das Klebemittel ist Polyvinylacetat. Grundsätzlich bieten sich auch andere thermoplastische Polymermaterialien an, jedoch sind beste Ergebnisse bezüglich der Störfestigkeit des Papiers beim Laserdrucken mit Polyvinylacetat, Copolymeren von Polyvinylacetat und Polyethylen, mit Polyvinylchlorid und mit Polyacrylatdispersionen erzielt worden. Die Klebemittel können gefüllt, z.B. mit Pigmenten oder anderen üblichen Hilfsstoffen oder ungefüllt eingesetzt werden. Insbesondere eignen sich die vorgenannten Polymermaterialien als thermoplastisches Polymermaterial angesichts der hohen Temperaturen, die am Heizsattel des Laserdruckers herrschen, welcher für das Fixieren des Tonermaterials auf dem Papier sorgt.

Alternativ lassen sich erfindungsgemäß selbstverständlich aber auch mit Wasser aktivierbare Anfeuchtleime im Zusammenhang mit vorliegender Erfindung verwenden, wobei allerdings solche Papiere gegenüber dem Einwirken von Feuchtigkeit empfindlich sind und im Stapel leichter zu Verklebungen neigen.

Daneben steht als weitere Alternative selbstverständlich auch eine Klebemittelbeschichtung aus einem druckaktivierbaren Selbstkleber zur Verfügung, wobei diese Klebemittelbeschichtung wiederum nicht so problemlos zu handhaben ist, wie die Klebemittelbeschichtung aus thermoplastischem Polymermaterial.

Üblicherweise wird insbesondere für die Herstellung von Einblattmailern das einlagige Papiererzeugnis einseitig mit Klebemittel beschichtet. Selbstverständlich ist auch eine doppelseitige Beschichtung möglich. Hierbei kann man einen bereichsweisen Auftrag von Klebemittelbeschichtung, beispielsweise an den Rändern des Papiers, vornehmen oder aber auch, wenn die Verklebestellen des Papiers nicht von vornherein feststehen und standardmäßig verklebbares Papier hergestellt werden soll, ganzflächig beschichten. Die ganzflächige Beschichtung empfiehlt sich natürlich auch dann, wenn der Nebenaspekt der thermoplastischen Klebemittelbeschichtung ausgenutzt werden soll, nämlich das Verankern des Tonermaterials mit dem Papier und das Eindringen desselben in das Papier zur Erzielung einer dokumentenechten Bedruckung.

Die Hydrophilie wird durch Tenside, insbesondere Fluoralkylnatriumsulfat(e) oder Fluoralkyl-polyoxyethylen oder Gemischen davon erzeugt. Auf der einen Seite wirken diese Substanzen Silikonöl-abweisend, schützen aber auf der anderen Seite das Polymer in der Tiefe der Beschichtung.

Versuche zeigen, dass bei Hitzeeinwirkung der Einsatz von Fluoralkylnatriumsulfat(en) oder Fluoralkylpolyoxyethylen das thermoplastische Polymer schützt und dadurch die nachfolgende Verschlusstechnik nicht mehr negativ beeinflusst wird.

Die Dosierung dieser Substanzen bewirkt zudem, dass beim Beschichtungsvorgang eine schnelle Phasentrennung zwischen Wasser und den Pigmenten und Polymer erfolgt, dies bewirkt, dass die aktiven Substanzen bevorzugt auf der Papieroberfläche bleiben (Filtereffekt). Das Ergebnis ist, dass die Temperatur und der Druck in der Verschlussmaschine um 30 - 40% gesenkt werden können.

Geringerer Verschleiß, Lärm, Energieeinsparung und Senkung der Beschichtemenge sind die Folge.

Durch die Temperaturanwendung beim Fixiervorgang im Laserdrucker, insbesondere in industriellen Hochleistungs-Laser-Printern, wird die vollflächige, thermoplastische Beschichtung in gewissem Umfang erweicht und begünstigt damit eine innige Verschmelzung des Toners mit der Papierfläche. Die Silikonöl-abweisende Wirkung der Beschichtung bewirkt dabei, dass die negativen Einflüsse der Silikonöle auf den Fixiervorgang weitgehend ausgeschlossen werden. Das wäre bei der Aufnahme des Silikonöls, wie im vorstehend zitierten Stand der Technik vorgeschlagen, nicht in dem gewünschten Umfang der Fall. Es entstehen daher Schriftbilder, die durch Kratzen oder Knicken des Dokuments nicht mehr verändert werden.

Bei Dokumenten wie z.B. Führerscheinen, bei denen z.B. durch Abändern von Buchstaben oder Zahlen neue Identitäten fabriziert werden können, kann durch die vorliegende Erfindung verbesserte Fälschungssicherheit erlangt werden.

Nachstehend werden Vertreter der Mittel bzw. Stoffe beschrieben, die die Klebemittelschicht des erfindungsgemäßen Papiererzeugnisses Silikonöl-abweisend gestalten.

### Fluorchemische anionische Tenside

Als Hydrophiliermittel und Silikonöl-abweisendes Mittel ist ein fluorchemisches anionisches Tensid geeignet. Insbesondere eignen sich Fluoralkylnatriumsulfate. Derartige Mittel sind von Ciba-Specialty bzw. Huntsman unter dem Handelsnamen Lodyne® bekannt. Es eignen sich insbesondere die Produkte Lodyne® S 103A sowie S-107 B. Bekannt sind auch die Produkte 2000, 2010 und 2020 oder S-152B. Die Firma Chemguard® Specialty Chemicals übernahm die Lodyne®-Reihe 2003. Die Produkte nennen sich nun Chemguard® mit der jeweiligen Nummer der Lodyne®-Reihe, z.B. Chemguard® S-103A. Lodyne® bzw. Chemguard® S 103A ist ein anionisches fluorchemisches Tensid vom Fluoralkylsulfonat-Typ. Der Schmelzpunkt beträgt 8°C und die Dichte etwa 1,2 g/cm³. Der Flammpunkt beträgt 95°C. Es besitzt eine 100%ige Löslichkeit in Wasser. Der Siedepunkt beträgt 100°C.

### Fluoralkyl-polyoxyethylen

Fluoralkyl-polyoxyethylen bzw. Rf-PEG ist ein Polyethylenglykol bzw. Polyoxyethylen mit perfluorierten oder teilfluorierten Alkylabschnitten. Der Stoff wirkt als Tensid und gehört zur Klasse der fluorchemischen Tenside. Ein Vertreter dieser Tensidklasse ist Surflon® von Asahi Glass. Dieses Fluortensid vermindert die Oberflächenspannung so stark, wie es mit üblichen auf Kohlenwasserstoff basierenden Tensiden nicht erreicht werden kann. Beispielsweise ist es bei der Verbesserung der Befeuchtung von festen Oberflächen, Verbesserung der Nivellierung von Flüssigkeiten und Stabilisierung von Schaum in allen Arten von Flüssigkeiten wirksam.

### Wasserlösliche Surflon®-Produkte

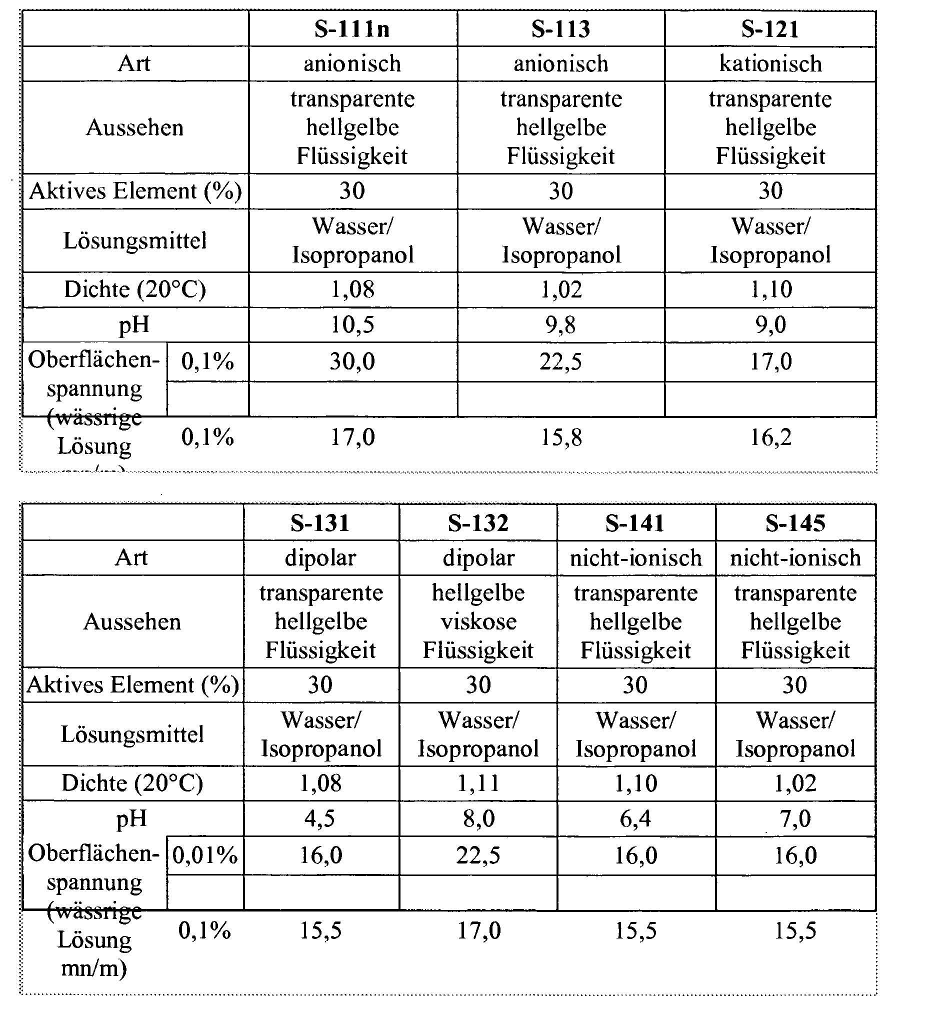

### Öllösliche Surflon® Produkte

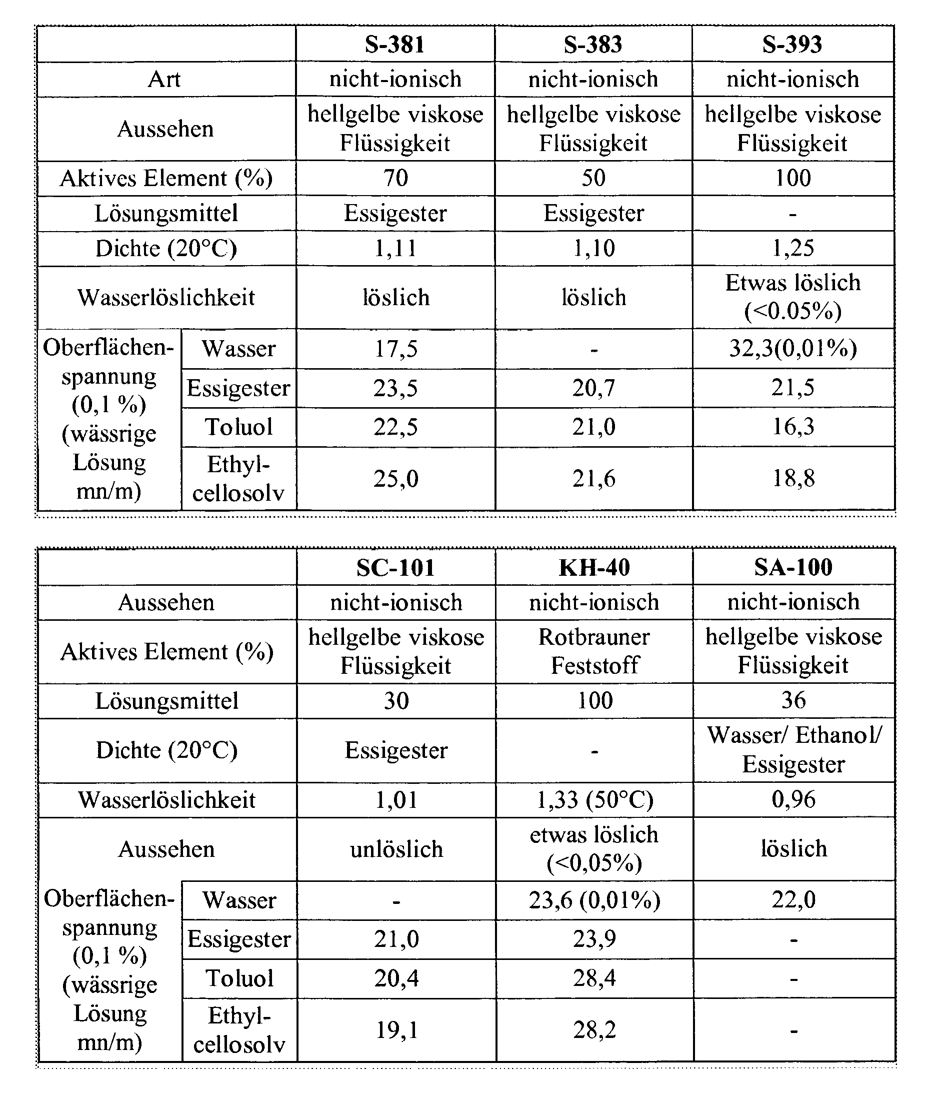

Die Klebemittelbeschichtung, d.h. die schließlich auf das Substrat aufzutragende Zusammensetzung, wird vorzugsweise in zwei Stufen aus folgenden Bestandteilen a) und b) in an sich bekannter Weise angemischt:
a)
Auf 100 Teile Wasser:
0,1 bis 1,0 Teile, vorzugsweise 0,2 bis 0,5, insbesondere 0,2 bis 0,4 Teile Dispergiermittel.
20 bis 50 Teile, vorzugsweise 25 bis 45 Teile, insbesondere 30 bis 40 Teile Silica-Pigment.
10 bis 20 Teile, vorzugsweise 12,5 bis 17,5 Teile, insbesondere 14 bis 16 Teile gefälltes CaCO₃.
0,1 bis 20 Teile, vorzugsweise 2 bis 17 Teile, bevorzugt 5 bis 16 Teile, insbesondere 7 bis 15 Teile eines wie vorstehend näher erläuterten Mittels, ausgewählt aus Fluoralkylnatriumsulfat(en), Fluoralkylpolyoxyethylen-Polymer(en), und Gemischen davon.

Als Dispergiermittel kann ein Dispergiermittel mit oder ohne Polyphosphat eingesetzt werden. Zweck des Dispergiermittels ist die Begünstigung des Dispergierens der Pigmente. Kommerzielle Produkte sind jene der Reihe Dispex® (Allied Chemicals), insbesondere Dispex®100.
Das Silica-Pigment ist in der Regel ein amorphes Calcium-modifiziertes Silica-Pigment. Es eignen sich Produkte der Shieldex®-Reihe von GRACE Davison, insbesondere Shieldex® AC 5.
Es ist bevorzugt, wenn das Pigment eine durchschnittliche Partikelgröße von 3-6 µm, insbesondere 3,8-5,2 µm, einen pH-Wert in 10%iger wässriger Suspension von 8,8-9,8 und einen Nassrückstand (> 42 µm) von maximal 0,01 aufweist.
Typische Eigenschaften des Pigments sind vorzugsweise eine Ölzahl von etwa 60 g/100 g, ein Calcium-Gehalt (bez. Auf Trockensubstanz) von etwa 6 %, ein Wassergehalt von etwa 3 % und eine Dichte von etwa 1,3.
Als gefälltes CaCO₃ kann handelsübliches, chemisch gefälltes Calciumcarbonat, das üblicherweise als Füllstoff eingesetzt wird, verwendet werden.
b)
Nach Anmischen der vorstehend genannten Bestandteile wird das eigentliche Klebemittel, im vorliegenden Fall ein thermoplastisches Polymermaterial, damit zusammengebracht. Das so erhaltene Gemisch wird dann auf das Substrat gerakelt.
Als thermoplastisches Material hat sich ein Stoff mit folgenden Eigenschaften bevorzugt bewährt:

| | | |
|---|---|---|
| a. | Mindestfilmtemperatur (MFT) | 10 - 25 °C, vorzugsweise 16 - 20 °C |
| b. | Filmbildungstemperatur (TG) | 20 - 45 °C, vorzugsweise 31 - 33 °C |

Dieser Stoff umfasst vorzugsweise das thermoplastische Polymermaterial Polyvinylacetat, Copolymere von Vinylacetat und Ethylen, Polyvinylchlorid und/oder Polyacrylatdispersionen.
Ein bevorzugtes thermoplastisches Polymermaterial für das Klebemittel ist Polyvinylacetat., insbesondere Produkte der Mowilith-Reihe (z.B. von Celanese oder Clariant) insbesondere Mowilith DC. Mowilith DC ist eine wässrige Vinylacetat-Homopolymer-Dispersion ohne Weichmacher. Der Feststoffanteil liegt bei 55-57% (DIN EN ISO 3252; 2h; 105°C). Die Brookfield-Viskosität beträgt etwa 1000 bis 4000 mPa.s (DIN EN ISO 2555; RVT; Spindel Nr. 3; 20 U/min, 23 °C). Der pH-Wert des Produkts liegt bei 4,0 bis 5,0 (DIN ISO 976; unverdünnt). Die Teilchengröße beträgt etwa 0,3 bis 2,0 µm (DIN ISO 2115).
Des Weiteren kann die Klebemittelzusammensetzung ggf. auch weitere auf dem Fachgebiet übliche Zusätze, wie Viskositätsmodifizierer, Korrosionsschutzmittel, Konservierungsmittel, Mikrobizide etc. enthalten.
Bei dem erfindungsgemäßen Papiererzeugnis wird ferner beobachtet, dass es durch die Erwärmung im Bereich des Heizsattels plastifiziert wird und dadurch ohne Störungen zu verursachen auch um kleine Radien umgelenkt werden kann.
Schließlich wird beobachtet, dass bei dem erfindungsgemäßen Papiererzeugnis mittels Variation der Pigmentanteile die Blocktemperatur und die Siegeltemperatur beeinflussbar sind, derart, dass bei höheren Pigmentgehalten eine höhere Siegeltemperatur notwendig wird, während die Neigung zum Verblocken des Papiers in Stapel, d. h. ein großflächiges Verkleben der Papierblätter oder der Bahnen auf der Rolle durch eine ebenfalls erhöhte Blocktemperatur vermindert wird.
Diese und weitere Vorteile der Erfindung werden im folgenden anhand von Beispielen noch näher erläutert.

### Beispiele

### Beispiel 1 nicht erfindungsgemäß

100,0 Teile Wasser
0,3 Teile Dispex 100 (Allied Chemicals)
35,0 Teile Shildex AC 5 (Fa. Grace)
15,0 Teile CaCO₃ chem. gefällt
15,0 Teile Mowiol®-Lsg. 8-88 10%ig (Fa. Clariant)

In 100 g Wasser werden durch ein schnell laufendes Rührwerk in der oben aufgeführten Reihenfolge die Substanzen langsam eingerührt und 20 Min homogenisiert.

Anschließend wird die Pigmentaufschlämmung mit 350 Teilen Mowilith DC durch ein langsam laufendes Rührwerk vermischt.

Mit einer Rollrakel werden auf ein 90 g/m² holzfreies Papier 4,5 g/m² Beschichtemasse (Trockenmasse) aufgetragen und bei 90°C im Trockenschrank getrocknet.
Die Probe wird bei folgenden Parametern versiegelt:

| | |
|---|---|
| 2 Sec. | : Zeit |
| 100 N | : Druck |
| 90°C | : Temperatur |

Eine einwandfreie Klebeverbindung der Papierlagen, die nicht trennbar ist, wird erhalten.

Die beschichtete Probe wird mit einer Rollrakel mit Silikonöl (XEROX-FUSER-AGENT) Typ 8 R 90 163 beschichtet. Aufnahme im Papier 3 g/m². Die Probe wird nach der Silikonüberschichtung 3 Min. bei 100 °C im Trockenschrank getempert.

Nach Abkühlen der Probe wird ein Versiegelungsversuch durchgeführt.

### Versiegelungsparameter:

| | |
|---|---|
| 2 Sec. | : Zeit |
| 100 N | : Druck |
| 90 °C | : Temperatur |

Auch hier zeigen die Papierproben einen einwandfreien Papierklebeverbund, während Proben aus den Patentschriften EP 0257545 A2, DE 4432903 C1, DE 4432902 C1 und DE 4432876 C1 bei dieser Vorgehensweise sich nicht mehr verkleben lassen.

### Beispiel 2

100,0 Teile Wasser
0,3 Teile Dispex 100 (Allied Chemicals)
35,0 Teile Shildex AC 5 (Grace)
15,0 Teile CaCO₃ chem. gefällt
7,5 Teile Lodyne® S 103A (Fa. Ciba-Geigy) 1 : 10 mit Wasser verdünnt

In 100 g Wasser werden durch ein schnell laufendes Rührwerk in der oben aufgeführten Reihenfolge die Substanzen langsam eingerührt und 20 Min. homogenisiert.

Anschließend wird die Pigmentaufschlämmung mit 350 Teilen Mowilith DC durch ein langsam laufendes Rührwerk vermischt. Mit einer Rollrakel werden auf ein 90 g/m² holzfreies Papier 4,5 g/m² Beschichtung (trockenes Gewicht) aufgetragen und bei 90 °C im Trockenschrank getrocknet.

Die Probe wird bei folgenden Parametern versiegelt:

| | |
|---|---|
| 2 Sec. | : Zeit |
| 100 N | : Druck |
| 90 C | : Temperatur |

Eine einwandfreie Klebeverbindung der Papierlagen, die nicht trennbar ist, wird erhalten.

Die beschichtete Probe wird mit einer Rollrakel mit Silikonöl (XEROX-FUSER-AGENT Typ 8R 90163) überschichtet. Aufnahme im Papier 3 g/m². Die Probe wird nach der Silikonbeschichtung 3 Min. bei 100 °C im Trockenschrank getempert.

Nach Abkühlung der Probe wird ein Versiegelungsversuch durchgeführt.

### Versiegelungsparameter:

| | |
|---|---|
| 2 Sec. | : Zeit |
| 100 N | : Druck |
| 90 °C | : Temperatur |

Auch hier zeigt sich, dass die Proben einen einwandfreien Papierklebeverbund ergeben, während Proben aus den Patentschriften EP 0257545 A2, DE 4432903 C1, DE 4432902 C1 und DE 4432876 C1 bei dieser Vorgehensweise sich nicht mehr verkleben lassen.

### Beispiel 3

100,0 Teile Wasser
0,3 Teile Dispex 100 (Allied Chemicals)
35,0 Teile Shildex AC 5 (Grace)
15,0 Teile CaCO₃ chem. gefällt
7,5 Teile Lodyne® S-107 B (Ciba-Geigy) 1 : 10 mit Wasser verdünnt

In 100 g Wasser werden durch ein schnell laufendes Rührwerk in der oben aufgeführten Reihenfolge die Substanzen langsam eingerührt und 20 Min. homogenisiert.

Anschließend wird die Pigmentaufschlämmung mit 350 Teilen Mowilith DC durch ein langsames Rührwerk vermischt.

Mit einer Rollrakel werden auf ein 90 g/m² holzfreies Papier 4,5 m² Beschichtung (trockenes Gewicht) aufgetragen und bei 90 °C im Trockenschrank getrocknet.

Die Probe wird bei folgenden Parametern versiegelt:

| | |
|---|---|
| 2 Sec. | : Zeit |
| 100 N | : Druck |
| 90 °C | : Temperatur |

Eine einwandfreie Klebeverbindung der Papierlagen, die nicht trennbar ist, wird erhalten.

Die beschichtete Probe wird mit einer Rollrakel mit Silikonöl (XEROX-FUSER-AGENT Typ 8R 90163) überschichtet. Aufnahme im Papier 3 g/m². Die Probe wird nach der Silikonbeschichtung 3 Min. bei 100 °C im Trockenschrank getempert.

Nach Abkühlen der Probe wird ein Versiegelungsversuch durchgeführt. Versiegelungsparameter:

| | |
|---|---|
| 2 Sec. | : Zeit |
| 100 N | : Druck |
| 90 °C | : Temperatur |

Auch hier zeigt sich, dass die Proben einen einwandfreien Papierklebeverbund ergeben, während Proben aus den Patentschriften EP 0257545 A2, DE 4432903 C1, DE 4432902 C1 und DE 4432876 C1 bei dieser Vorgehensweise sich nicht mehr verkleben lassen.

## Patentansprüche

1. Papiererzeugnis mit einer Silikonöl-abweisenden, aktivierbaren Klebemittelbeschichtung, die mit einem Laserdrucker bedruckbar ist, wobei die Klebemittelbeschichtung zum Verkleben einer Einzellage mit sich selbst oder von benachbarten Lagen von Papiererzeugnissen miteinander vorgesehen ist, **dadurch gekennzeichnet, dass** die Silikonölabweisung mit einem Stoff eingestellt wird, der aus Fluoralkylnatriumsulfat(en) und Fluoralkylpolyoxyethylen-Polymer(en) und Gemischen davon ausgewählt ist.

2. Papiererzeugnis nach Anspruch 1, **dadurch gekennzeichnet**, das die Einsatzmenge des die Silikonölabweisung hervorrufenden Stoffs im Falle von Fluoralkylnatriumsulfat(en) oder Fluoralkylpolyoxyethylen-Polymer(en) 0,001 - 3,0 % beträgt.

3. Papiererzeugnis nach Anspruch 1 oder 2, **dadurch gekennzeichnet, dass** die Klebemittelbeschichtung ein thermoplastisches Polymermaterial als Klebemittel enthält.

4. Papiererzeugnis nach Anspruch 3, **dadurch gekennzeichnet, dass** das thermoplastische Polymermaterial folgende Eigenschaften hat,
| | | |
|---|---|---|
| a. | Mindestfilmtemperatur (MFT) | 10 - 25 °C |
| b. | Filmbildungstemperatur (TG) | 20 - 45 °C |

5. Papiererzeugnis nach Anspruch 4, **dadurch gekennzeichnet, dass** das thermoplastische Polymermaterial folgende Eigenschaften hat,
| | | |
|---|---|---|
| a. | Mindestfilmtemperatur (MFT) | 16 - 20 °C |
| b. | Filmbildungstemperatur (TG) | 31 - 33 °C |

6. Papiererzeugnis nach einem der Ansprüch 3 bis 5, **dadurch gekennzeichnet, dass** das thermoplastische Polymermaterial Polyvinylacetat, Copolymere von Vinylacetat und Ethylen, Polyvinylchlorid und/oder Polyacrylatdispersionen umfasst.

7. Papiererzeugnis nach einem der vorangehenden Ansprüche, **dadurch gekennzeichnet, dass** die Klebemittelbeschichtung einen mit Wasser aktivierbaren Anfeuchtleim umfasst.

8. Papiererzeugnis nach einem der vorangehenden Ansprüche, **dadurch gekennzeichnet, dass** die Klebemittelbeschichtung einen druckaktivierbaren Selbstkleber umfasst.

9. Papiererzeugnis nach einem der vorangehenden Ansprüche, **dadurch gekennzeichnet, dass** die Klebemittelbeschichtung bereichsweise aufgetragen ist.

10. Papiererzeugnis nach einem der Ansprüche 1 bis 8, **dadurch gekennzeichnet, dass** die Klebemittelbeschichtung vollflächig aufgetragen wird.

11. Papiererzeugnis nach einem der vorangehenden Ansprüche, **dadurch gekennzeichnet, dass** die Bestandteile der Klebemittelbeschichtung so eingestellt werden, dass beim Beschichtevorgang eine schnelle Phasentrennung erfolgt, wobei die Silikonöl-abweisenden Stoffe im Wesentlichen an der Oberfläche eines Beschichtesubstrats bleiben.

12. Papiererzeugnis nach einem der vorangehenden Ansprüche, **dadurch gekennzeichnet, dass** das Klebemittel in einer Menge von 2-15 g/m² aufgetragen wird.

13. Verwendung eines Papiererzeugnisses nach einem der vorangehenden Ansprüche als Einblattmailer.

14. Verwendung eines Papiererzeugnisses nach einem der Ansprüche 1 bis 12 bei der Herstellung von Formularsätzen.

15. Verwendung eines Papiererzeugnisses nach einem der Ansprüche 1 bis 12 zur Herstellung von Dokumenten, bei denen eine erhöhte Fälschungssicherheit gefordert wird.

16. Verwendung von Fluoralkylnatriumsulfat(en), Fluoralkylpolyoxyethylen-Polymer(en), und Gemischen davon zur Herstellung eines Papiererzeugnisses mit einer Silikonöl-abweisenden, aktivierbaren Klebemittelbeschichtung, die mit einem Laserdrucker bedruckbar ist, wobei die Klebemittelbeschichtung zum Verkleben einer Einzellage mit sich selbst oder von benachbarten Lagen von Papiererzeugnissen miteinander vorgesehen ist

## Claims

1. A paper product with a silicone oil-repellent, activatable adhesive coating that can be printed with a laser printer, with the adhesive coating serving to seal a single sheet to itself or neighboring sheets of paper products to one another, **characterized in that** the silicone oil repellency is obtained with the use of a substance selected from the group of fluoroalkyl sodium sulfate(s), fluoroalkyl polyoxyethylene polymer(s), polyvinyl alcohol(s) and mixtures thereof.

2. The paper product as in Claim 1, **characterized in that** the amount of material required to obtain silicone oil repellency is 0.001-3.0% if fluoroalkyl sodium sulfate(s) or fluoroalkyl polyoxyethylene polymers is/are used and 0.1-5.0% if polyvinyl alcohol(s) is/are used.

3. The paper product as in Claim 1 or 2, **characterized in that** the adhesive coating contains a thermoplastic polymer material as the adhesive.

4. The paper product as in Claim 3, **characterized in that** the thermoplastic polymer material has the following properties:
| | | |
|---|---|---|
| a. | Minimum film-forming temperature (MFT) | 10-25°C |
| b. | Film-forming temperature (TG) | 20-45°C |

5. The paper product as in Claim 4, **characterized in that** the thermoplastic polymer material has the following properties:
| | | |
|---|---|---|
| a. | Minimum film-forming temperature (MFT) | 16-20°C |
| b. | Film-forming temperature (TG) | 31-33°C |

6. The paper product as in Claims 3-5, **characterized in that** the thermoplastic polymer material comprises polyvinyl acetate, copolymers of vinyl acetate and ethylene, polyvinyl chloride, and/or polyacrylate dispersions.

7. The paper product as in any one of the preceding claims, **characterized in that** the adhesive coating comprises a remoistening adhesive that can be activated with water.

8. The paper product as in any one of the preceding claims, **characterized in that** the adhesive coating comprises a pressure-activated self-sealing adhesive.

9. The paper product as in any one of the preceding claims, **characterized in that** the adhesive coating is applied to defined areas.

10. The paper product as in any one of Claims 1-8, **characterized in that** the adhesive coating is applied to the full surface.

11. The paper product as in any one of the preceding claims, **characterized in that** the constituents of the adhesive coating are fine-tuned to ensure that during the coating procedure, a rapid-phase separation takes place, with the silicone oil-repellent substances essentially remaining on the surface of a coated substrate.

12. The paper product as in any one of the preceding claims, **characterized in that** the adhesive is applied in an amount of 2-15 g/m².

13. The paper product as in any one of the preceding claims for use as a pressure-seal mailer.

14. The use of a paper product as in any one of Claims 1-12 in the production of sets of printed forms.

15. The use of a paper product as in any one of Claims 1-12 in the production of documents for which an increased protection against tampering is required.

16. The use of a fluoroalkyl sodium sulfate(s), fluoroalkyl polyoxyethylene polymer(s) and mixtures thereof for the production of a paper product with a silicone oil-repellent, activatable adhesive coating that can be printed with a laser printer, with the adhesive coating serving to seal a single sheet to itself or neighboring sheets of paper products to one another.

## Revendications

1. Produit de papier comportant un revêtement de colle activable et répulsif pour l'huile de silicone, qui peut être imprimé par une imprimante laser, dans lequel le revêtement de colle est prévu pour coller une couche unique avec elle-même ou pour coller ensemble des couches voisines de produits de papier, **caractérisé en ce que** la répulsion de l'huile de silicone est réglée avec une substance qui est sélectionnée parmi un ou des fluoroalkylsulfates de sodium et un ou des polymères de fluoroalkylpolyoxyéthylène, ainsi que des mélanges de ceux-ci.

2. Produit de papier selon la revendication 1, **caractérisé en ce que** la quantité utilisée de la substance provoquant la répulsion de l'huile de silicone est de 0,001 à 3,0 % dans le cas du ou des fluoroalkylsulfates de sodium et du ou des polymères de fluoroalkylpolyoxyéthylène.

3. Produit de papier selon la revendication 1 ou 2, **caractérisé en ce que** le revêtement de colle contient un matériau polymère thermoplastique en tant que colle.

4. Produit de papier selon la revendication 3, **caractérisé en ce que** le matériau polymère thermoplastique a les propriétés suivantes,
| | | |
|---|---|---|
| a. | Température minimum du film (MFT) | 10 à 25 °C |
| b. | Température de formation du film (TG) | 20 à 45 °C |

5. Produit de papier selon la revendication 4, **caractérisé en ce que** le matériau polymère thermoplastique a les propriétés suivantes,
| | | |
|---|---|---|
| a. | Température minimum du film (MFT) | 16 à 20 °C |
| b. | Température de formation du film (TG) | 31 à 33 °C |

6. Produit de papier selon l'une des revendications 3 à 5, **caractérisé en ce que** le matériau polymère thermoplastique comprend l'acétate de polyvinyle, des copolymères d'acétate de vinyle et d'éthylène, du polychlorure de vinyle et/ou des dispersions de polyacrylate.

7. Produit de papier selon l'une des revendications précédentes, **caractérisé en ce que** le revêtement de colle comporte une colle à humidifier activable à l'eau.

8. Produit de papier selon l'une des revendications précédentes, **caractérisé en ce que** le revêtement de colle comporte un adhésif autocollant activable à la pression.

9. Produit de papier selon l'une des revendications précédentes, **caractérisé en ce que** le revêtement de colle est appliqué par zones.

10. Produit de papier selon l'une des revendications 1 à 8, **caractérisé en ce que** le revêtement de colle est appliqué sur toute la surface.

11. Produit de papier selon l'une des revendications précédentes, **caractérisé en ce que** les composants du revêtement de colle sont réglés de façon telle que lors du processus d'enduction, il se produit une séparation de phase rapide, les substances répulsives pour l'huile de silicone restant essentiellement au niveau de la surface d'un substrat de revêtement.

12. Produit de papier selon l'une des revendications précédentes, **caractérisé en ce que** la colle est appliquée dans une quantité de 2 à 15 g/m².

13. Utilisation d'un produit de papier selon l'une des revendications précédentes en tant qu'enveloppe.

14. Utilisation d'un produit de papier selon l'une des revendications 1 à 12 dans la fabrication de liasses d'imprimés.

15. Utilisation d'un produit de papier selon l'une des revendications 1 à 12 dans la fabrication de documents dans lesquels une sécurisation élevée est exigée.

16. Utilisation d'un ou de fluoroalkylsulfates de sodium, d'un ou de polymères de fluoroalkylpolyoxyéthylène et de leurs mélanges pour fabriquer un produit de papier présentant un revêtement de colle activable répulsif pour l'huile de silicone, qui est imprimable par une imprimante laser, où le revêtement de colle est prévu pour coller une couche unique avec elle-même ou pour coller ensemble des couches voisines de produits de papier.
